Europäisches Patentamt

European Patent Office

Office européen des brevets

(11) Publication number: **0 038 499**
**B1**

(12) EUROPEAN PATENT SPECIFICATION

(45) Date of publication of patent specification: **09.09.87**

(51) Int. Cl.⁴: **G 11 B 7/24, B 41 M 5/24**

(21) Application number: **81102786.1**

(22) Date of filing: **11.04.81**

(54) Optical recording and reproducing system.

(30) Priority: **15.04.80 JP 49714/80**

(43) Date of publication of application:
**28.10.81 Bulletin 81/43**

(45) Publication of the grant of the patent:
**09.09.87 Bulletin 87/37**

(84) Designated Contracting States:
**DE FR GB**

(56) References cited:
DE-A-2 933 253
FR-A-2 321 164

Patents Abstracts of Japan, vol. 1, no. 73, 14
July 1977, page 845E77

LASER + ELEKTRO-OPTIK, vol. 11, no. 1, 1979,
Stuttgart, "Optischer Speicher mit Diodenlaser
zeichnet 1010 Bit auf einer 30-Zentimeter-
Platte auf", pages 14-17

(73) Proprietor: **Matsushita Electric Industrial Co.,
Ltd.**
**1006, Oaza Kadoma**
**Kadoma-shi Osaka-fu, 571 (JP)**

(72) Inventor: **Akahira, Nobuo**
**13-6, Kanaburi Otokoyama**
**Yawata-shi Kyoto-fu (JP)**
Inventor: **Nagashima, Michiyoshi**
**45-56-407, Yamanote-cho Korien**
**Hirakata-shi Osaka-fu (JP)**
Inventor: **Harigae, Shunji**
**24-8, Torimi-cho 3-chome**
**Nara-shi Nara-ken (JP)**
Inventor: **Yoshida, Tomio**
**2-10-9, Myokenzaka**
**Katano-shi Osaka-fu (JP)**
Inventor: **Yamashita, Tadaoki**
**16-1, Inda-cho**
**Hirakata-shi Osaka-fu (JP)**

(74) Representative: **Eisenführ & Speiser**
**Martinistrasse 24**
**D-2800 Bremen 1 (DE)**

## Description

The present invention relates to an optical recording and reproducing system for recording and/or reproducing information, comprising a laser source, an optical system for focusing laser beam emitted by said laser source and an optical recording and/or reproducing disc, said disc comprising a disc-shaped base having at least one guide track which is preliminarily formed on the disc-shaped base by geometrically concave or convex portions, whereby on said disc-shaped base a light-sensitive thin film recording material is formed having a thickness not greater than two times the difference in height or depth of said concave or convex portions of said at least one guide track and the transmittance or reflectance of which is varied by heat or irradiation of the laser beam.

Such an optical recording and reproducing disc is known from DE—A—29 33 253 wherein a light sensitive material is coated as a thin film composed of a sub-oxide such as tellurium oxide on the surface of a supporting member and which on supply of optical energy in form of a light beam such as a focussed laser beam selectively changes the refractive index and the optical density due to the heat applied on the recording material. Thus, in addition to an optical video disc for the exclusive use of reproduction, the disc may be used for optical record reproduction wherein the record reproduction can be performed immediately by the semiconductor laser whereby the thin film changes in beam reflectance and/or beam transmittance due to the temperatures through the laser beam application. To protect the light sensitive recording member a protective layer may be coated on said light sensitive recording member. This known arrangement, however, requires a relative large laser power to change the reflective index and the optical density due to the heat provided by the laser beam and furthermore cracks may be caused in the recording film due to the decrease and the recording power and the heat during the recording operation.

Another optical recording and reproducing disc and apparatus is known from DE—A—2 712 013 wherein by the application of a semiconductor laser rows of recorded bits are provided whereby this development is based on a system of drilling a hole in the recording film due to the laser heat to form the record bits.

From JP—A—51-10102 an optical or mechanical recording disc is known wherein a record layer is formed on a base material for recording an information by mechanical or photoelectrical means. For a guiding purpose only the base board of the record layer is provided with rugged guide tracks formed in advance, whereby the guide tracks include the recorded information. Thus, the width of the guide track for guiding the recording or reproducing means is approximately the same as the diameter of the effective spot of a laser beam for a photoelectrical recording or reproducing of an information. However, also this known arrangement requires a relative large laser power to change the refractive index and the optical density due to the heat provided by the laser beams. In addition, cracks may be caused in the recording film due to the decrease and the recording power in the heat during the recording operation.

From "LASER + ELECTRO-OPTIK", Vol. 11, No. 1, 1979, Stuttgart, pages 14 to 17, an arrangement for recording and reproducing information by means of a laser beam is known wherein the laser beam is applied on a disc which comprises a disc-shaped base having at least one guide track which is preliminarily formed on the disc-shaped base. The depth of said guide track is an eighth of the wave length of the light of the applied diode laser which is 820 nm. On the disc-shaped base a light sensitive recording material is formed which is made of a tellurium-containing material having a larger thermal conductivity than the disc-shaped base and which has a thickness of 300 Ångström. Thus, the light sensitive recording material is less than two times the difference in depth of said guide track. However, even in this known arrangement the thermal distortions of the recording film may occur due to the heat provided by the laser beams. Thus, cracks may be caused in the recording film due to the decrease and the recording power and the heat during the recording operation.

It is an object of the present invention to provide an optical recording and reproducing system for recording and/or reproducing information by the application of laser beams thereonto which removes the cracking phenomena and reduces the thermal distortion of the recording film due to a decrease in the recording power and the heat during the recording operation.

In order to accomplish this object the present invention is characterised in that in combination the disc-shaped base has a thermal conductivity less than that of the light-sensitive recording material, that the light-sensitive recording-material is capable of erasing and that the width of the guide track is required not to differ from the effective diameter of the laser beam by more than ± 20%.

The optical recording and reproducing system for recording and/or reproducing information by the application of laser beams thereonto according to the present invention is suited to considerably remove the cracking phenomena during the recording operation and to reduce the thermal distortion of the recording film due to the geometrical relation among the recording film, guide track and laser beam diameter such that heat diffusion through the recording thin film is suppressed, with the approvement of the relative sensitivity.

The features of the present invention will become apparent from the following description taken in conjunction with the preferred embodiment thereof with reference to the accompanying drawings, in which:

Figs. 1(a), (b) are partial sectional views for illustrating the construction of an optical record disc,

Figs. 2(a), (b), Figs. 3(a), (b) and Fig. 4 are views showing the construction of some embodiments of a disc, and

Fig. 5 is a view for illustrating the relation between the application beam and the guide track width in a disc for an optical record reproduction use.

Before proceeding the description, it is to be noted that the like parts are designated by like reference numerals throughout the accompanying drawings.

Fig. 1(a) shows one example of a disc base material 1, which is provided with optical convex-shaped guide grooves B. Fig. 1(a) shows a partially enlarged disc base material, and the guide track A shown in Fig. 1(a) is formed, in concentrical or spiral construction, almost uniformly on the entire face of at least an area for recording signals. The width W of the track A is different depending upon the wavelength of a light source to be used or the coherency degree thereof. When semiconductor laser of approximately 8000Å in wavelength is used as a light source, approximately 0.7 through 1 μm is preferable. Reference character T shows a track pitch of the track A which is prescribed by the content of a signal to be recorded and reproduced and the amount of the tolerable crosstalk of a signal between the tracks. The track pitch T is set to a value of approximately 1.4 through 2.0 μm. The height difference d between the guide track A and the groove B, which is located between the tracks, is set to the depth of 1/6 through 1/12 of the wavelength λ of the incident light so that asymmetrical diffraction effect may be provided with respect to light, which is applied upon the guide track A. The disc base material 1, which is provided with such convex-shaped or concave-shaped guide grooves B can be made with an art of making the original panel of the conventional video disc.

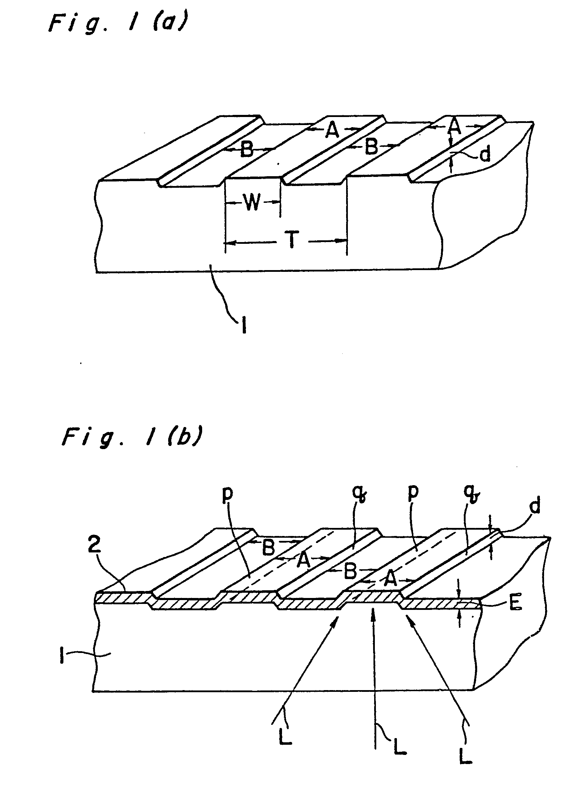

Fig. 1(b) shows a light sensitive recording material 2 (hereinafter referred to as light recording material) uniformly formed on the disc base material 1 shown in the Fig. 1(a). The light recording material 2 is formed to the thickness in the range of several hundreds Å through two thousands Å although the thickness is different depending upon the types of the recording materials. Referring to Fig. 1(b), the recording light L which is incident from the side of the base material is closed to a light beam whose diameter is equal to 0.7 through 1.0 μm (the width of the guide track A) or more. When the height d between the track A and the groove B on the disc is kept selected to the above-described λ/6 through λ/12 so that the end faces p, q of the guide track A may be caused asymmetrical diffraction effect in the direction normal to the track A with respect to the axis of the incident light, the far field pattern of the reflection light on the light recording material face provides the better representation of the positional shift normal in direction to the track between the record light and the track A so that the tracking error signals may be obtained. Accordingly, the track of Fig. 1(b) can be followed with a tracking mirror. As the base material 1, a material, which is optically homogeneous and transparent, such as polymethyl methacrylate resin, polyvinyl chloride resin or the like can be used.

As a method of forming the guide grooves B, these resins can be used through the application of the conventional art of making the video disc as it was. Namely, grooves are formed by a hot press method or an injection method or the like. The groove layer can be provided on the base material 1 using these resins with the other resins such as ultraviolet hardening resin. As the recording member 2, sub-oxide light absorbing film such as film composed of TeOx (x ≈ 1) can be applied. The film can be formed, by a vacuum evaporation method, to a given thickness independently of the ruggedness of the base material.

The effects to be produced from the construction and the construction for producing the effects to maximum will be described hereinafter in detail.

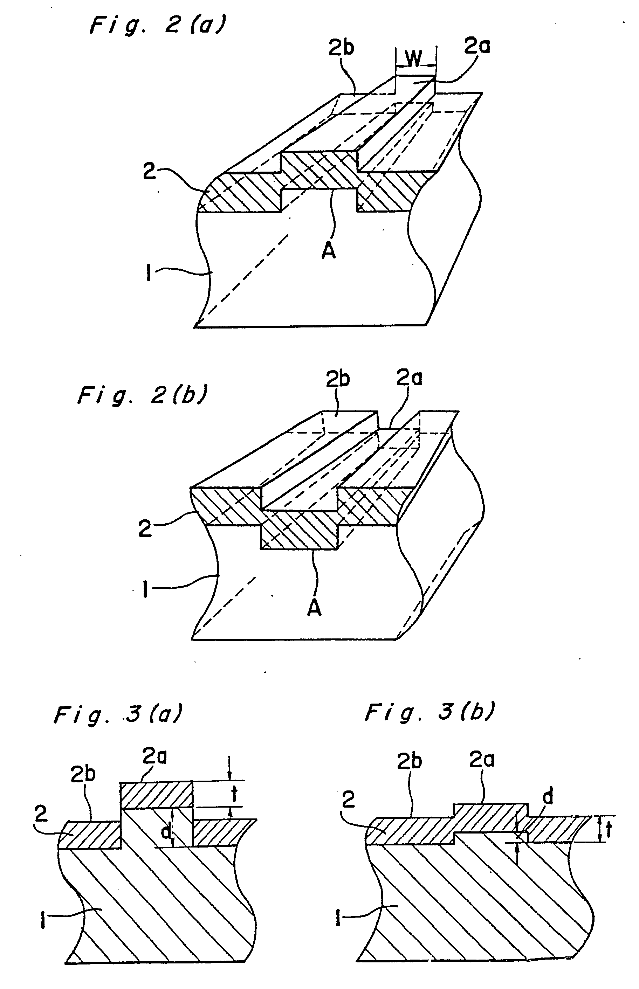

Fig. 2(a) shows the construction corresponding to that of Fig. 1(b). Referring to Fig. 2, a laser beam is applied upon the recording film 2a disposed on the relatively concave portion A, which constitutes the guide t rack of the base material 1. The recording film 2a absorbs the laser light to increase the temperature. The heat quantity caused at this time moves to the other portion of the base material and the recording film 2a to make escape. Stage difference is provided between a portion indicated with 2a and a portion indicated with 2b. Suppose the disc construction has a recording film formed on the plane base plate which is not provided with grooves therein, and the heat of the laser light escapes in all the directions along the recording film, with the result that the temperature increasing efficiency of the laser beam application part is inferior, since the thermal conductivity of the recording film is 10 times or 100 times as compared with that of the resin base plate. Since the stage difference is caused in the film by this groove, the heat is correspondingly difficult to escape, with the result that the temperature is easily raised in the application position. Namely, the recording operation can be made with less laser power. According to the experiments of the inventors, cracks were caused in the film due to the raised temperature of the film during the recording operation in the case of the plane base plate free from grooves. However, no cracks were caused at all on such grooved disc of the embodiment of the present invention. The recording film, which is cut off in shape by the stage difference, has an effect of reducing the thermal distortion.

Then, the track width W, which most effectively raises the temperature by the laser beams, will be described hereinafter. The convex shape, which is constant in width and sufficiently long in length as a track A formed in concentric circle or spiral, will be described. The width W which is sufficiently greater as compared with the spot of the beam to be applied corresponds to a plane disc. Since the amount of film material per unit length becomes smaller as the width W becomes narrower, the thermal capacity reduces so that the temperature is likely to be raised. Also, since the contact area between the recording film and the base plate becomes smaller as the information track width W becomes narrower, the thermal transfer amount to the base plate becomes smaller. The temperature rise is better when the guide track width W is as wide as the thickness $\omega$ of the light beam or is somewhat smaller than it. Namely, in the conditions of ($\omega \geqq$ W), the effect is greater. The thickness $\omega$ of the light beam means effective beam diameter which has sufficient strength to change the characteristics of a recording material within the beam application face during no-signals. The effect is the same even when the guide track A is shaped to become relatively concave as shown in Fig. 2(b). Particularly, when the thermal conductivity of the base material is sufficiently smaller than that of the recording film, no difference is provided between the convex shape shown in Fig. 2(a) and the concave shape shown in Fig. 2(b). When the width W of the track becomes narrower than the effective beam diameter w, difficulty is caused in terms of reproduction. Namely, the reflection light amount or transmission light amount caused by signals recorded on the track reduces, thus resulting in reduced S/N ratio. Generally speaking, the guide track A is optimum to be approximately the same as wide as or slightly narrower than the effective beam diameter. To achieve an expected object, the width of the guide track A is required not to differ from the effective beam diameter by more than $\pm$ 20%, preferably by not more and is preferred to be in than $\pm$10%.

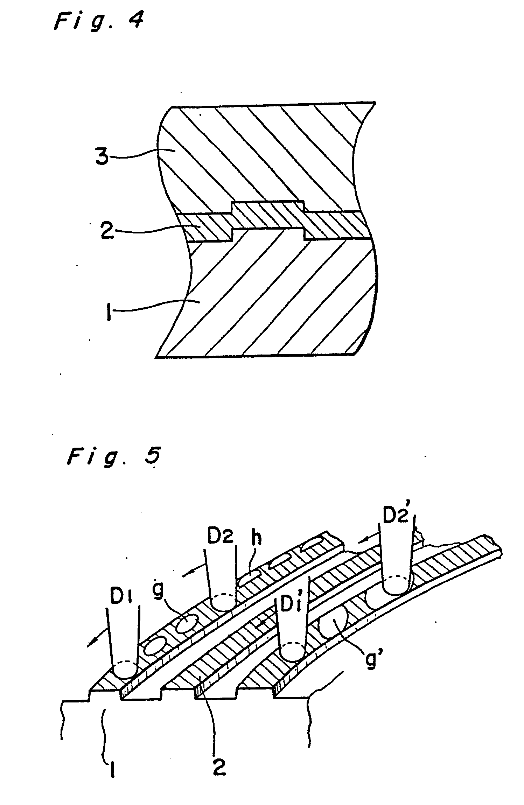

The relationship between the thickness t of the recording film and the depth (height) d of the unevenness of the base material 1 will be described hereinafter. When the relationship of t $\leq$ d is established as shown in Fig. 3(a), the heat conduction within the recording film is cut off at the stage difference portion of the unevenness of the base material, and thus the above-described effect is greatest. Even when the relation of t > d is established as shown in Fig. 3(b), the adiabatic effect can be expected except when t is sufficiently larger than d. Particularly, in the case of t $\leq$ 2d, the heat conduction of the recording film in the stage difference becomes half or less of the heat conduction of the plane so that with the result that the effect is large. Namely, the recording film is preferred to be at least two times as thick as the stage difference of the groove.

In one embodiment of the new disc construction described hereinabove, PMMA of 1 mm in thickness was used as a grooved base material. The stage difference was 700Å, the width of the concave portion was 8000Å, the evaporated recording film was TeOx (x $\approx$ 1) and 1400Å in thickness. When the recording operation was performed with semiconductor laser, which was closed to a spot of approximately 8000Å by an optical system of NA = 0.5, the recording operation could be effected with the laser power of approximately three fifth in the case of the grooved base material as compared with the non-grooved base material.

Then, an example where a protective layer adhered on the recording film has been coated as the construction of the practical disc will be described hereinafter. Fig. 4 shows an embodiment wherein the recording film 2 is covered with the other member 3 for the purpose of the mechanical protection. Even in this case, geometrical convexes or concaves are provided on the base material 1 as shown in the drawing, when the thermal conductivity of the protective member 3 is sufficiently small, to improve the recording sensitivity. An optically homogeneous resin such as polystyrene having thermal conductivity 0.8 through 1.2 $\times$ 10$^{-3}$ J/cm sec.°k is dissolved in the solvent of aromatic or the like such as xylene and is coated, dried thereby to provide the material 3. In the case of such adhesion protective construction, deformation and evaporation are required to be avoided as a method of making records on the film with laser beams. Only a method of varying the optical condition, such as reflection factor, without change in the shape can be used. Generally, the recording film as extremely thin as approximately 1000Å. Since the film is heated during the recording operation, it is likely to be oxidized in a condition where it is exposed to air. Once it is oxidized, the transmission factor becomes layer in that portion. Transparency is distributed in accordance with the distribution of the temperature near the recording bit. Namely, blur is caused in the recording bit. This fact causes S/N to decrease in the case of the FM type recording. However, such adherent protective layer is formed to prevent the oxidation.

The low oxide film of tellurium described hereinabove has an erasing property in certain composition conditions. The member is whitened at a portion where the slightly strong beam of the semiconductor laser is applied and is blackened at a portion where a weaker beam is applied. Also, the whitening and blackening conditions can be provided through variation of the laser pulse width. Namely, the member is whitened through the short time application of the beam of 100 nsec. or less and is blackened through the long time application of the beam of 200 nsec or more. This whitening operation and blackening operation can be repeatedly performed.

Fig. 5 is a view for illustrating an embodiment of the record erasure in such erasing disc as described hereinabove. Referring to Fig. 5, a base material is generally at 1. A film for erasure recording use is generally designated at 2. A laser beam is generally designated at $D_1$ in a case where the writing-in operation has been effected with the laser of the beam diameter narrower than the width of the convex-shaped guide track. The laser beam for erasure use narrower than the guide track width is generally represented at $D_2$. Also, reference character g is a white bit signal written in. Reference character h is one portion of the white bit signal not erased. When the laser beam diameter is narrower than the track width, the rest unerased is caused due to some shifting of the laser beam running operation. Referring to Fig. 5, $D_1'$, $D_2'$, g' correspond to the above-described $D_1$, $D_2$ and g. An example is shown where the diameter of the laser beam is almost the same as the width of the guide track or is slightly thicker than it. In this case, the rest unerased is not caused, since the laser beam runs along the track. The conditions of $(W \leqq \omega)$ of such beam diameter $\omega$ and the groove width W as described hereinabove is provided from such erasing conditions as described hereinabove.

## Claim

An optical recording and reproducing system for recording and/or reproducing information, comprising a laser source, an optical system for focusing a laser beam emitted by said laser source and an optical recording and/or reproducing disc, which comprises a disc-shaped base having at least one guide track which is preliminarily formed on the disc-shaped base by geometrical concave or convex portions, whereby on said disc-shaped base a light-sensitive thin film recording material is formed having a thickness not greater than two times the difference in height or depth of said concave or convex portions of said at least one guide track, and the transmittance or the reflectance of which is varied by heat of irradiation of the laser beam, characterized in that in combination said disc-shaped base (1) has a thermal conductivity less than that of said light-sensitive recording material (2), that said light-sensitive recording material (2) is capable of erasing and that the width of said guide track (2a, 2b) is required not to differ from the effective diameter of said laser beam by more than ± 20%.

## Patentanspruch

System zum optischen Aufzeichnen und/oder Wiedergeben von Informationen, mit einer Laserquelle, einem optischen System zum Fokussieren des durch die Laserquelle ausgesandten Laserstrahls und einem scheibenförmigen Aufzeichnungsträger zum optischen Aufzeichnen und Wiedergeben, der eine scheibenförmige Basis mit mindestens einer Führungsspur enthält, die auf der scheibenförmigen Basis durch geometrische konkave oder konvexe Bereiche vorgeformt ist, wobei auf der scheibenförmigen Basis ein lichtempfindlicher, dünner Film als Aufzeichnungsmaterial gebildet ist, dessen Dicke nicht größer als die doppelte Differenz zwischen Höhe oder Tiefe der konkaven oder konvexen Bereiche der mindestens einen Führungsspur ist, und wobei dessen Übertragungs oder Reflexionsvermögen durch die Wärmestrahlung des Laserstrahls variiert wird, dadurch gekennzeichnet, daß in Kombination die scheibenförmige Basis (1) eine thermische Leitfähigkeit aufweist, die geringer als die des lichtempfindlichen Aufzeichnungsmaterials (2) ist; daß das lichtempfindliche Aufzeichnungsmaterial (2) löschbar ist und daß die Breite der Führungsspur (2a, 2b) so ausgebildet ist, daß sie von dem effektiven Durchmesser des Laserstrahls um nicht mehr als ± 20% abweicht.

## Revendication

Système d'enregistrement et de reproduction optique destiné à enregistrer et/ou reproduire des informations, comportant une source à laser, un système optique destiné à focaliser un faisceau laser émis par ladite source à laser et un disque d'enregistrement et/ou de reproduction optique, comprenant une base en forme de disque avec au moins une piste de guidage qui est formée préalablement sur la base en forme de disque par des parties géométriquement concaves ou convexes, la base en forme de disque portant une mince pellicule sensible à la lumière de matière d'enregistrement formée avec une épaisseur qui ne dépasse pas deux fois la différence de hauteur ou de profondeur desdites parties concaves ou convexes de ladite au moins une piste de guidage et dont le pouvoir de transmission ou le pouvoir de reflexion est modifié par la chaleur d'irradiation du faisceau de laser, caractérisé en ce que ladite base en forme de disque (1) a une conductivité thermique inférieure à celle de ladite matière d'enregistrement sensible à la lumière (2), en ce que ladite matière d'enregistrement sensible à la lumière (2) est succeptible d'effacement et que la largeur de ladite piste de guidage (2a, 2b) ne diffère pas nécessairement du diamètre effectif dudit faisceau laser de plus ± 20%.

*Fig. 1 (a)*

*Fig. 1 (b)*

0 038 499

Fig. 2 (a)

Fig. 2 (b)

Fig. 3 (a)

Fig. 3 (b)

*Fig. 4*

*Fig. 5*